# EUROPÄISCHE PATENTSCHRIFT

(11) **EP 3 692 779 B1**
(45) Veröffentlichungstag und Bekanntmachung des Hinweises auf die Patenterteilung: **20.10.2021**
(21) Anmeldenummer: 20168161.6
(22) Anmeldetag: 18.04.2018
(51) Int. Cl.: A01C 17/00

(54) **LANDWIRTSCHAFTLICHER SCHLEUDERSTREUER UND VERFAHREN ZUR ERMITTLUNG DES STREUBILDES BEI EINEM LANDWIRTSCHAFTLICHEN SCHLEUDERSTREUER**
AGRICULTURAL CENTRIFUGAL SPREADER AND METHOD FOR DETERMINING THE SPREAD PATTERN OF AN AGRICULTURAL CENTRIFUGAL SPREADER
ÉPANDEUR AGRICOLE ET PROCÉDÉ DE DÉTERMINATION DE LA TRAJECTOIRE D'ÉPANDAGE D'UN ÉPANDEUR AGRICOLE

(30) Priorität: 02.05.2017 DE 102017109308
(43) Veröffentlichungstag der Anmeldung: 12.08.2020
(62) Teilanmeldung aus: 18401039.5
(73) Patentinhaber: Amazonen-Werke H. Dreyer SE & Co. KG, 49205 Hasbergen (DE)
(72) Erfinder: RAHE, Florian, 49504 Lotte (DE); WIEN, Thomas, 28816 Stuhr (DE)

(56) Entgegenhaltungen:
- EP-A1- 3 152 995
- EP-A1- 3 228 173
- EP-A1- 3 241 420

## Beschreibung

Die Erfindung betrifft ein Verfahren zur Ermittlung des Streubildes bei einem landwirtschaftlichen Schleuderstreuer gemäß dem Oberbegriff des Patentanspruches 1.

Die Einstellung der Parameter landwirtschaftlicher Schleuderstreuer erfolgt durch eine Vielzahl von Sensoren am Schleuderstreuer zunehmend automatisiert. So ist es beispielsweise aus der DE 10 2013 103 060 A1 bekannt, Radarsensoren in der Nähe der Streuscheiben eines Schleuderstreuers anzuordnen, um die Querverteilung des Streugutes zu ermitteln und die Parameter zur Korrektur der Querverteilung des Streugutes ggf. automatisch anzupassen. Auch ist es aus der DE 10 2014 116 023 A1 bekannt, mittels eines Radarsensors die Fluggeschwindigkeit in einiger Entfernung des Schleuderstreuers zu messen und daraus die Wurfweite zu ermitteln. Die EP 3 241 420 A1 und die EP 3 152 995 A1 zeigen Schleuderstreuer, welche Radarsensoren sowohl zur Ermittlung der Querverteilung, als auch zur Ermittlung der Fluggeschwindigkeit beziehungsweise Wurfweite aufweisen.

Für eine optimierte Ermittlung der Wurfweite ist es wünschenswert, zumindest je einen Sensor zur Ermittlung der Wurfweite pro Streuscheibe vorzusehen, also mindestens zwei Sensoren bei üblichen Schleuderstreuern mit zwei Streuscheiben. Je nach Ausrichtung der Sensoren kann es jedoch häufig zu Problemen bei der Einstellung des Schleuderstreuers kommen, da es einen großen Überlappungsbereich im Streufächer des Schleuderstreuers gibt, in den von beiden Streuscheiben Streugut hineingeworfen wird. Eine Messung der Wurfweite in diesem Überlappungsbereich erschwert somit die Einstellung des Schleuderstreuers, da üblicherweise nur die Parameter der Streuscheibe angepasst werden, der der jeweilige Sensor zugeordnet ist, dessen Messwerte diesbezüglich ausgewertet werden, die Messsignale des Sensors unter Umständen jedoch durch Streugut beider Streuscheiben bedingt ist.

Aufgabe der vorliegenden Erfindung ist es ein Verfahren bereitzustellen, mit dem eine verbesserte Einstellung eines gewünschten Streubildes des Schleuderstreuers möglich ist.

Diese Aufgabe wird durch den kennzeichnenden Teil des Anspruchs 1 erreicht. Nach einem anderen Aspekt der Offenbarung werden die Sensoren zur Ermittlung der mittleren Wurfweite des Streugutes derart am Schleuderstreuer angeordnet, dass die Messrichtungen der zumindest zwei Sensoren in der horizontalen Ebene zumindest annähernd in Richtung des mittleren Abwurfwinkels der jeweiligen Streuscheibe ausgerichtet sind. Hierbei wird also die horizontale Komponente der Messrichtung betrachtet und die Sensoren derart angeordnet, dass diese zumindest annähernd in Richtung des mittleren Abwurfwinkels der jeweiligen Streuscheibe, der der Sensor zugeordnet ist, ausgerichtet ist. Die Messrichtung der beiden Sensoren ist somit in horizontaler Ebene nichtparallel ausgerichtet. Auf diese Weise kann effektiv verhindert werden, dass die Sensoren das von der jeweils anderen Streuscheibe abgeworfene Streugut erfassen und somit eine fehlerbehaftete Ermittlung der Wurfweite des Streugutes für die jeweilige Streuscheibe erfolgt.

Die Messrichtung der Sensoren kann also auch eine vertikale Komponente besitzen, die allerdings hierbei nicht betrachtet wird und im Prinzip beliebig gewählt werden kann. Vorzugsweise wird die vertikale Komponente in Abhängigkeit der Position der Sensoren am Schleuderstreuer derart gewählt, dass die Geschwindigkeit des Streugut durch die Sensoren in einiger Entfernung, vorzugsweise mehr als 2 m vom Schleuderstreuer entfernt detektiert wird. Hierdurch ist die Geschwindigkeit des Streugutes nach dem Abwurf von der Streuscheibe bereits durch den Luftwiderstand und in Abhängigkeit der Eigenschaften des Streugutes reduziert. Es kann somit aus der Ermittlung der Geschwindigkeit in einiger Entfernung und zumindest einem weiteren Parameter, wie der Abwurfgeschwindigkeit von der Streuscheibe eine Geschwindigkeitsdifferenz und/oder eine mittlere Wurfweite ermittelt werden. Der zumindest eine weitere Parameter, insbesondere die Abwurfgeschwindigkeit kann durch eine weitere Messung in der Nähe der Streuscheibe und/oder die Drehzahl der Streuscheibe und/oder die Art der Streuscheibe und/oder der Wurfschaufeln und/oder des Streugutes ermittelt werden.

Der mittlere Abwurfwinkel jeder Streuscheibe gibt den Abwurfwinkel gemittelt über das insgesamt durch die Streuscheibe abgeworfene Streugut an, wobei der mittlere Abwurfwinkel ausgehend von einer entgegen der Fahrtrichtung des Schleuderstreuers verlaufenden, vom Streuscheibenzentrum ausgehenden Gerade gemessen wird. Der mittlere Abwurfwinkel gibt also den Winkel zwischen der Fahrtrichtung und der mittleren Wurfrichtung an, wobei die mittlere Wurfrichtung gewissermaßen vom Zentrum der jeweiligen Streuscheibe in Richtung des Massenschwerpunktes des Streufächers dieser Streuscheibe zeigt. Bei der mittleren Wurfweite handelt es sich um die mittlere Entfernung zwischen dem Zentrum der jeweiligen Streuscheibe und dem Punkt, an dem das Streugut auf den Erdboden auftrifft. Die mittlere Wurfweite wird aus den Messsignalen des Sensors vorzugsweise für die jeweilige Streuscheibe ermittelt, der der Sensor zugeordnet ist. Die Messrichtung der Sensoren gibt die Richtung an aus der die Messsignale durch den Sensor empfangen werden. Da der Sensor typischerweise einen Messbereich aufweist, ist die Messrichtung die mittlere Richtung oder Hauptrichtung aus der Messsignale durch den Sensor empfangen werden können. Dass die Messrichtungen der zumindest zwei Sensoren in der horizontalen Ebene zumindest annähernd in Richtung des mittleren Abwurfwinkels der jeweiligen Streuscheibe ausgerichtet sind meint hierbei, dass jeder Sensor in Richtung des Winkels ausgerichtet ist, welcher sich bei Abtragen des mittleren Abwurfwinkels von der Fahrtrichtung nach außen hin ergibt. Anders gesagt ist der Sensor in Richtung der mittleren Wurfrichtung der jeweiligen Streuscheibe ausgerichtet. Es ist eine zumindest annähernde Ausrichtung in dieser Richtung deswegen zweckmäßig, weil die Sensoren typischerweise fest montiert und in ihrer Ausrichtung nicht variabel sind, der mittlere Abwurfwinkel jedoch je nach Einstellung der Drehzahl des Schleuderstreuers und des Aufgabepunktes des Streugutes auf die Streuscheibe in Grenzen variabel und anpassbar ist. Wichtig ist hier lediglich, dass die Ausrichtung der Sensoren derart gewählt wird, dass ein Bereich erfasst wird, in den nur Streugut von der Streuscheibe geworfen wird, der der Sensor zugeordnet ist. Dies kann insbesondere dadurch erreicht werden, dass der Sensor ungefähr in der Richtung des mittleren Abwurfwinkels der jeweiligen Streuscheibe ausgerichtet wird. Hierbei können die Messrichtungen der zumindest zwei Sensoren in der horizontalen Ebene einen Winkel von zumindest 10°, insbesondere zumindest 30°, zueinander aufweisen.

In einer möglichen Ausgestaltung sind die zumindest zwei Sensoren zur Messung der mittleren Fluggeschwindigkeit des Streugutes mittels Messung einer Dopplerverschiebung ausgebildet. Mittels Dopplerverschiebung ist die Fluggeschwindigkeit des Streugutes und hieraus abgeleitet die Wurfweite besonders effektiv und präzise ermittelbar. Hierbei wird die Frequenz der für die Messung ausgesendeten und an dem Streugut reflektierten Radarwellen ermittelt. Die Frequenz ist hierbei auf Grund des Dopplereffektes abhängig von der Geschwindigkeit des reflektierenden Streugutes.

In einer vorteilhaften Weiterbildung verfügt der Schleuderstreuer über eine Datenverarbeitungseinheit und Stellmitteln zur Anpassung von Parametern, wie Ausbringmenge, Aufgabepunkt des Streugutes auf die Streuscheiben und Drehzahl der Streuscheiben, zur Änderung der Streubildes, wobei die Datenverarbeitungseinheit ausgebildet ist, aus den Messsignalen der zumindest zwei Sensoren die mittlere Wurfweite des Streugutes für die jeweilige Streuscheibe zu ermitteln und die Stellmittel derart einzustellen, dass ein in der Datenverarbeitungseinheit hinterlegtes Sollstreubild eingestellt wird. Es ist also vorgesehen, dass in der Datenverarbeitungseinheit ein Sollstreubild bzw. eine gewünschte Verteilcharakteristik, beispielsweise in Form einer gewünschten Arbeitsbreite und Wurfweite, hinterlegt ist und die Parameter durch die Datenverarbeitungseinheit ggf. derart angepasst werden, dass das Sollstreubild eingestellt wird. Das Sollstreubild, welches durch einen Wert für die Wurfweite je Streuscheibe und vorzugsweise einen Wert für den mittleren Abwurfwinkel je Streuscheibe gekennzeichnet ist, zeichnet sich üblicherweise durch eine gegenüber Fahrfehlern besonders robuste Querverteilung des Düngers aus. Vorzugsweise weist das Streubild eine dreieckige Form auf, mit der größten Menge an verteiltem Streugut direkt hinter dem Schleuderstreuer und seitlich zu beiden Seiten abfallender Menge an verteiltem Streugut.

Es kann insbesondere vorgesehen sein, dass der Schleuderstreuer zusätzlich zu den Sensoren zur Ermittlung der Wurfweite auch über zumindest einen Sensor zur Ermittlung des Abwurfwinkels des Streugutes von den Streuscheiben verfügt. Hierbei kann es sich insbesondere um eine bezüglich des jeweiligen Streuscheibenzentrums konzentrische Anordnung von Radarsensoren handeln, deren Messbereich jeweils einen Teil des Abwurfbereiches der Streuscheibe abdecken, so dass sich aus der Intensität der durch das abgeworfene Streugut reflektierten Radarwellen die Dichte der Streugutpartikel im jeweiligen Messbereich und daraus der mittlere Abwurfwinkel der Streuscheibe ermitteln lässt. Auch diese Sensoren können durch die Datenverarbeitungseinheit ausgelesen werden und die Parameter zur Einstellung eines gewünschten Streubildes in Reaktion auf diese Sensorsignale ggf. angepasst werden.

In einer vorteilhaften Weiterbildung ist dem Schleuderstreuer ein Windsensor zur Ermittlung der Windstärke und/oder Richtung zugeordnet und reduziert die Datenverarbeitungseinheit den Einfluss von Windstärke und/oder Windrichtung auf das Streubild durch Vergleich und/oder Verrechnung der mittels der beiden Sensoren für die jeweilige Streuscheibe ermittelten Wurfweite, insbesondere durch Mittelwertbildung, und entsprechende Einstellung der Stellmittel. Ein dem Schleuderstreuer zugeordneter Windsensor kann hierbei einen Windsensor umfassen, der direkt am Schleuderstreuer oder an einem den Schleuderstreuer ziehenden oder tragenden Schlepper angeordnet ist. Alternativ können auch per Datenverbindung Messdaten von einer stationären Messstation in der Nähe des Schleuderstreuers, beispielsweise in einigen 100 m oder wenigen km Entfernung, berücksichtigt werden.

Alternativ oder zusätzlich kann vorgesehen sein, die für die beiden Streuscheiben ermittelten Wurfweiten und/oder Fluggeschwindigkeiten zu vergleichen und/oder zu verrechnen. Auf Grund der Tatsache, dass die Messrichtung der Sensoren in der horizontalen Ebene nichtparallel ausgerichtet ist, wirkt sich der Wind in der Regel unterschiedlich auf das durch die beiden Sensoren erfasste Streugut aus. Insbesondere für den Fall, dass die Verteilcharakteristiken der beiden Streuscheiben identisch sein sollen, kann durch Mittelung der ermittelten Werte für die Wurfweite bzw. Fluggeschwindigkeit der Einfluss von Wind auf das Streubild ermittelt und berücksichtigt werden.

Beansprucht wird ein erfindungsgemäßes Verfahren zur Ermittlung des Streubildes bei einem landwirtschaftlichen Schleuderstreuer mit den Merkmalen des Anspruchs 1. Demnach werden zur Reduktion des Einflusses von Windstärke und/oder Windrichtung auf die Ermittlung des Streubildes eine ermittelte erste Größe und zumindest eine zweite ermittelte Größe berücksichtigt. Bei der ermittelten ersten Größe handelt es sich um eine erste zu der Fluggeschwindigkeit des abgeworfenen Streugutes proportionale Größe nach dem Abwurf von der oder den Streuscheiben. Es wird also nach dem Abwurf des Streugutes von der oder den Streuscheiben eine Größe ermittelt, die zu der Fluggeschwindigkeit des Streugutes proportional ist. Hierbei kann es sich insbesondere um eine gemessene Dopplerfrequenz der abgeworfenen Streugutpartikel handeln. Die gemessene Dopplerfrequenz der abgeworfenen Streugutpartikel ist also proportional zur Geschwindigkeit der Streugutpartikel. Zur Berücksichtigung der Dopplerfrequenz ist es notwendig, dass das Messsignal eine signifikant horizontale Komponente aufweist, um in dieser Flugrichtung der Streugutpartikel die Dopplerfrequenz und damit die Geschwindigkeit der Streugutpartikel bestimmen zu können. Im Unterschied zur Messung der Querverteilung mittels Radarsensoren in der Nähe der Streuscheiben wird die Messung der Wurfweite der Streugutpartikel durch einen Sensor durchgeführt, der üblicherweise weiter oben am Schleuderstreuer angeordnet und derart ausgerichtet ist, dass die Dopplerfrequenz der sich bewegenden Streugutpartikel in einiger Entfernung, insbesondere in einem Abstand von mehreren Metern hinter dem Schleuderstreuer ermittelt wird. Eine Messung einer ersten zu der Fluggeschwindigkeit des abgeworfenen Streugutes proportionalen Größe nach dem Abwurf von der und/oder den Streuscheiben zeichnet sich hierbei dadurch aus, dass diese erste Größe an einer Position bestimmt wird, an der die Fluggeschwindigkeit der Streugutpartikel sich nach dem Abwurf bereits signifikant reduziert hat. Weitere Größen, wie beispielsweise die Fahrgeschwindigkeit des Traktors können bei der Ermittlung der Wurfweite ebenfalls berücksichtigt werden.

Erfindungsgemäß ist vorgesehen, zur Reduktion des Einflusses von Windstärke und/oder Windrichtung auf die Ermittlung des Streubildes die ermittelte erste Größe und zumindest eine zweite ermittelte Größe zu berücksichtigen. Die Einstellung der gewünschten Sollstreubilder erfolgt typischerweise in einer windgeschützten Streuhalle. Hierbei werden Messreihen für verschiedene Düngertypen und Arbeitsbreiten durchgeführt, bei denen die Messwerte der Sensoren am Schleuderstreuer zur Ermittlung der Wurfweite und des mittleren Abwurfwinkels bei verschiedenen Parametern des Schleuderstreuers, wie Drehzahl und Aufgabepunkt, ermittelt und mit dem tatsächlichen Streubild verglichen werden. Auf diese Weise lassen sich ideale Parameter für die Wurfweite und den mittleren Abwurfwinkel ermitteln, die für die jeweilige Arbeitsbreite das ideale Sollstreubild charakterisieren. Die Wurfweite ist hierbei im Rahmen der Erfindung der mittlere Abstand zwischen Streuscheibenzentrum und dem Auftreffpunkt des Streugutes auf die landwirtschaftliche Fläche. Bei der Arbeit auf dem Feld kann Windeinfluss zu einer Verfälschung der Messwerte für die Wurfweite führen. Der Wind kann beispielsweise zu einer reduzierten Wurfweite in der Messrichtung des Sensors führen, wenn der Wind dieser entgegengerichtet ist. Dies führt zu einem veränderten Messwert und somit zu einer unerwünschten Anpassung der Parameter des Streuvorganges durch die Datenverarbeitungseinheit. Um dies zu verhindern wird erfindungsgemäß ein hinsichtlich des Windeinflusses bereinigter Messwert für die Wurfweite ermittelt. Dies wird erreicht, indem eine zweite ermittelte Größe bei der Auswertung des Messwertes für die Wurfweite und/oder Fluggeschwindigkeit berücksichtigt wird. Es ist hierbei denkbar verschiedene zweite Messgrößen zur Bestimmung und/oder Reduktion des Windeinflusses zu ermitteln und ggf. zur Verbesserung des Ergebnisses auch zu kombinieren.

Erfindungsgemäß ist aber vorgesehen, dass der Schleuderstreuer über einen Windsensor zur Ermittlung der Windrichtung und/oder der Windstärke verfügt und die ermittelte Windrichtung und/oder Windstärke als zweite ermittelte Größe bei der Ermittlung des Streubildes berücksichtigt wird. Je nach Windstärke und/oder Richtung ist also vorgesehen, den Einfluss auf die Wurfweite zu ermitteln und/oder zu reduzieren durch Berücksichtigung der Windstärke und/oder Windrichtung. Je nach Windrichtung kann beispielsweise vorgesehen sein, die Windstärke oder eine zu der Windstärke proportionale Größe additiv oder multiplikativ bei der Bestimmung der Wurfweite zu berücksichtigen. Je nach Windrichtung kann der Wind zu einer vergrößerten oder verringerten Wurfweite im Vergleich zur Windstille führen. Es kann entsprechend vorgesehen sein, die Windrichtung zusätzlich bei der Ermittlung der Wurfweite zu berücksichtigen.

Der Schleuderstreuer verfügt über einen zweiten Sensor, insbesondere Radarsensor, zur berührungslosen Ermittlung einer zu der Fluggeschwindigkeit des abgeworfenen Streugutes proportionalen zweiten Größe nach dem Abwurf von der Streuscheibe, wobei der erste Sensor einer ersten Streuscheibe und der zweite Sensor einer zweiten Streuscheibe des Schleuderstreuers zugeordnet ist und wobei die ermittelte erste Größe und zweite Größe bei der Ermittlung des Streubildes berücksichtigt wird. Eine Reduktion des Windeinflusses auf die ermittelte erste Größe kann nun in einfacher Weise alternativ oder zusätzlich durch Berücksichtigung der zweiten Größe erreicht werden. Dies ergibt sich daraus, dass die Messrichtung der Sensoren in horizontaler Ebene nichtparallel ausgerichtet ist. Zur genaueren Ermittlung der Wurfweite ist also vorgesehen, beiden Streuscheiben eines Schleuderstreuers je einen Sensor, insbesondere Radarsensor, zur Ermittlung der Wurfweite zuzuordnen, wobei der jeweilige Sensor bevorzugt die Wurfweite des Streugutes ermittelt, welches von der Streuscheibe abgeworfen wurde, der der Sensor zugeordnet ist. Gewöhnlich sind die gewünschten Streubilder der beiden Streuscheiben und damit die Parameter zumindest annähernd identisch, so dass auch die Wurfweite der beiden Streuscheiben identisch sein sollte. Lediglich in Randbereichen einer landwirtschaftlichen Fläche ist üblicherweise die Verteilcharakteristik der ersten Streuscheibe unterschiedlich von der der zweiten Streuscheibe. Da je nach Windrichtung der Windeinfluss auf die Messergebnisse wegen der unterschiedlichen Messrichtungen der Sensoren unterschiedlich ist, kann durch eine Verrechnung der Messwerte der beiden Sensoren, insbesondere eine Mittelwertbildung, der Einfluss des Windes auf die Wurfweite herausgerechnet bzw. reduziert werden, falls die gewünschte Wurfweite für die erste und zweite Streuscheibe identisch ist.

In einer vorteilhaften Weiterbildung der Erfindung wird eine zu der Wurfweite proportionale Größe aus der ersten und zweiten Größe und der Umdrehungsgeschwindigkeit der zumindest einen Streuscheibe sowie vorzugsweise der Art der verwendeten Streuscheiben und/oder Wurfschaufeln ermittelt. Es ist also vorgesehen, für die Ermittlung der Wurfweite oder einer hierzu proportionalen Größe die erste und die zweite ermittelte Größe zu berücksichtigen. Zudem ist zur Ermittlung der Wurfweite vorgesehen, die Abwurfgeschwindigkeit von der jeweiligen Streuscheibe oder eine hierzu proportionale Größe zu ermitteln, diese Abwurfgeschwindigkeit lässt sich aus der Drehzahl der Streuscheiben und vorzugsweise unter Berücksichtigung der verwendeten Streuscheiben und/oder Wurfschaufeln abschätzen. Zur genaueren Bestimmung der Abwurfgeschwindigkeit kann zudem vorgesehen sein, die Art des ausgebrachten Streugutes zu berücksichtigen. Alternativ kann zur Bestimmung der Abwurfgeschwindigkeit auch ein Sensor zur Ermittlung derselben in unmittelbarer Nähe der Streuscheibe angeordnet sein.

In einer vorteilhaften Weiterbildung ist vorgesehen, zur Einstellung eines Sollstreubildes die erste und zweite Größe bei der Einstellung der Parameter des Schleuderstreuers, insbesondere Streuscheibendrehzahl und/oder Aufgabepunkt des Streugutes auf die Streuscheiben, zu berücksichtigen. Es ist also vorgesehen, den Einfluss des Windes auf die gemessene Größe, insbesondere Fluggeschwindigkeit oder Wurfweite, zu reduzieren, so dass der ermittelte Wert mit dem in der windstillen Streuhalle ermittelten Sollstreubild vergleichbar ist und das gewünschte Sollstreubild durch Anpassung der Parameter des Schleuderstreuers in gewünschter Weise einstellbar ist.

Weitere vorteilhafte Ausgestaltungen ergeben sich aus den Figuren und der Beispielsbeschreibung, hierbei zeigen
- Fig. 1: einen landwirtschaftlichen Schleuderstreuer auf einer landwirtschaftlichen Fläche in Seitenansicht,
- Fig. 2: einen landwirtschaftlichen Schleuderstreuer auf einer landwirtschaftlichen Fläche, dargestellt von oben und
- Fig. 3: einen landwirtschaftlichen Schleuderstreuer bei der Bearbeitung einer landwirtschaftlichen Fläche unter Windeinfluss, dargestellt von oben.

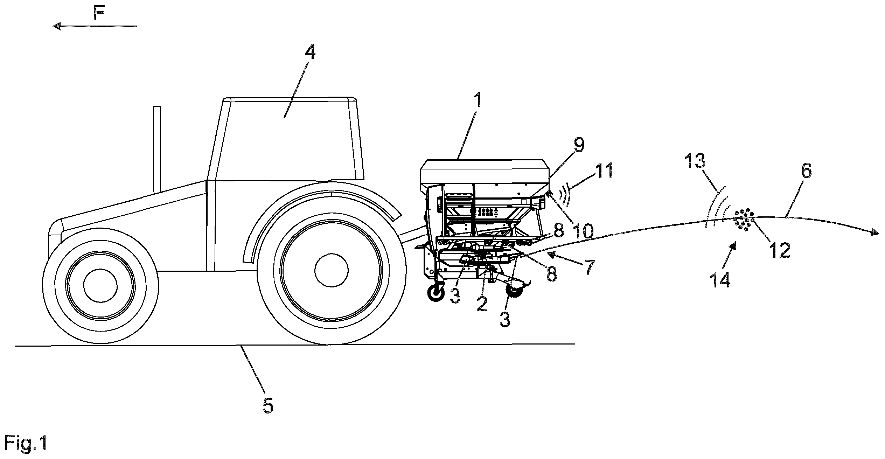

Ein landwirtschaftlicher Schleuderstreuer 1 mit Streuscheiben 2 und darauf angeordneten Wurfschaufeln 3 ist in Fig. 1 gezeigt. Der Schleuderstreuer 1 ist an einen Schlepper 4 angebaut und wird in Fahrtrichtung F über die landwirtschaftliche Fläche 5 bewegt. Das Streugut wird von den sich drehenden Streuscheiben entgegen der Fahrtrichtung F in Breitverteilung auf der landwirtschaftlichen Fläche 5 ausgebracht. Dabei bewegt sich das Streugut beispielsweise entlang einer Trajektorie 6. Auf seinem Weg entlang der Trajektorie wird das Streugut von verschiedenen Sensoren erfasst. Zunächst kann in unmittelbarer Nähe der Streuscheibe eine Sensoranordnung 7 vorgesehen sein, welche aus Radarsensoren 8 besteht, die in Umfangsrichtung, um die Streuscheibe 2 angeordnet sind. Die Radarsensoren 8 beaufschlagen das sich vorbei bewegende Streugut mit Radarwellen, wobei die reflektierte Intensität ein Maß ist für die Streugutdichte im jeweiligen Messbereich, so dass sich aus einer Gesamtschau der durch die Sensoren 8 der Sensoranordnung 7 ermittelten Messdaten der mittlere Abwurfwinkel für die jeweilige Streuscheibe 2 ermitteln lässt, der die Sensoranordnung 7 zugeordnet ist. Es kann vorgesehen sein, beiden Streuscheiben 2 des Schleuderstreuers 1 eine derartige Sensoranordnung 7 zuzuordnen.

Im oberen Bereich des Schleuderstreuers 1 bspw. an dem Vorratsbehälter 9 ist ein weiterer Radarsensor 10 pro Streuscheibe angeordnet. Dieser Sensor 10 beaufschlagt das weggeschleuderte Streugut in einiger Entfernung des Schleuderstreuers am Ort 14 mit Radarwellen 11. Die Radarwellen 11 werden hierbei beispielsweise an einem Düngerpaket 12, welches sich entlang der Trajektorie 6 bewegt, reflektiert. Die reflektierten Radarwellen 13 werden dabei von dem Sensor 10 erfasst und hinsichtlich ihrer Frequenz und ggf. Amplitude ausgewertet. Der Frequenzunterschied zwischen ausgesendeten Radarwellen 11 und reflektierten Radarwellen 13 ist ein Maß für die Bewegungsgeschwindigkeit des Düngerpakets 12 in Ausbreitungsrichtung der Radarwellen 11.

In einer nicht dargestellten, am Düngerstreuer 1 oder Schlepper 4 angeordneten Datenverarbeitungsvorrichtung kann die Bewegungsgeschwindigkeit des Düngerpakets 12 aus der Frequenzdifferenz der Radarwellen 11 und 13 bestimmt werden. Zusätzlich ist die Abwurfgeschwindigkeit des Streugutes von der Streuscheibe 2 aus der Drehzahl der Streuscheibe durch die Datenverarbeitungseinheit ermittelbar. Hierfür kann insbesondere der Typ der verwendeten Streuscheibe 2 und/oder der Wurfschaufeln 3 berücksichtigt werden. Die Abwurfgeschwindigkeit des Streugutes ist näherungsweise abhängig von der Drehzahl und der Art der verwendeten Streuscheibe und Wurfschaufeln. Zusätzlich kann vorgesehen sein, die Art des verwendeten Streugutes bei der Bestimmung der Abwurfgeschwindigkeit zu berücksichtigen, wobei sich herausgestellt hat, dass die Abwurfgeschwindigkeit für verschiedene Streugüter zumindest annähernd identisch ist. Alternativ oder zusätzlich kann in unmittelbarer Nähe der Streuscheiben 2 ein nicht dargestellter Sensor zur Ermittlung der Abwurfgeschwindigkeit vorgesehen sein. Aus der Differenz von Abwurfgeschwindigkeit und der ermittelten Geschwindigkeit der Düngerpartikel am Ort 14 kann nun durch die Datenverarbeitungseinheit eine mittlere Wurfweite des Streugutes ermittelt werden. Bei einem Schleuderstreuer 1 mit zwei Streuscheiben 2 ist vorgesehen, je eine Sensoranordnung 7 und einen Sensor 10 pro Streuscheibe 2 an dem Schleuderstreuer 1 anzuordnen.

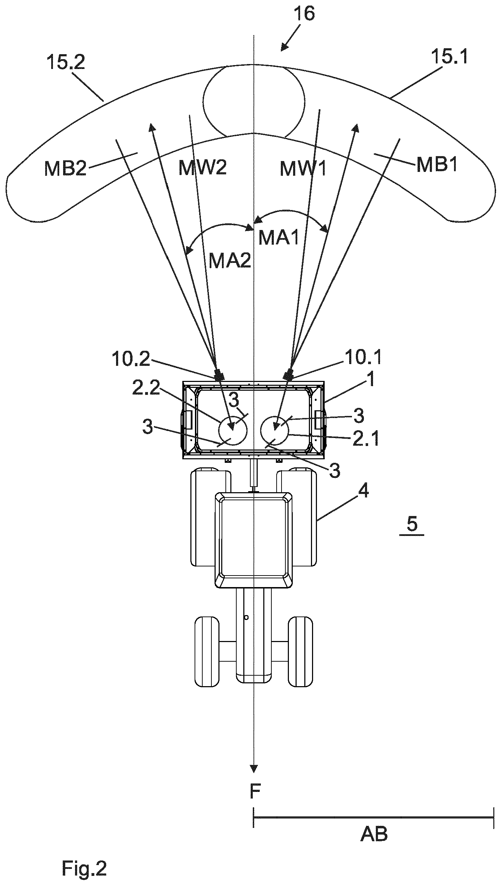

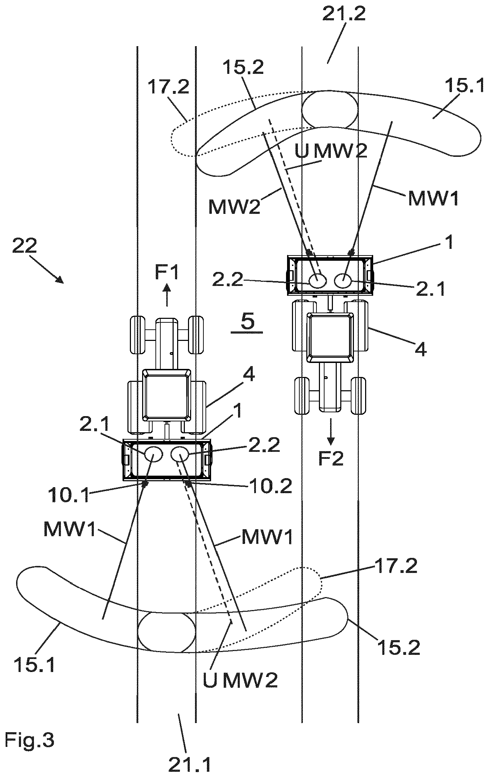

Ein Schleuderstreuer 1 bei der Bearbeitung einer landwirtschaftlichen Fläche 5 in einer Ansicht von oben ist in Fig. 2 dargestellt. Hierbei erzeugt eine erste Streuscheibe 2.1 den Teilstreufächer 15.1 und eine zweite Streuscheibe 2.2 den Teilstreufächer 15.2, wobei es zu einer Überlappung der Teilstreufächer 15.1, 15.2 im Bereich 16 kommt. Der Streufächer des Schleuderstreuers 1 ergibt sich nun als Einhüllende der Teilstreufächer 15.1, 15.2, wobei die in dem Streufächer abgelegte Menge an Streugut von der Mitte zu den Rändern abnimmt. Im Überlappungsbereich 16 ist die Menge an verteiltem Streugut somit am größten. Der Streufächer ist in den Abbildungen 2 und 3 lediglich schematisch dargestellt und kann in der Realität eine hiervon abweichende Form, Größe und/oder Position aufweisen, insbesondere breiter sein. Der Streufächer ist charakterisiert durch die mittlere Wurfweite MW1, MW2 für jede Streuscheibe 2.1, 2.2, welche den mittleren Abstand zwischen dem Streuscheibenzentrum und der Position angibt, an der das Streugut auf den Boden auftrifft und den mittleren Abwurfwinkel MA1, MA2, welche den Winkel zwischen der Fahrtrichtungsachse und dem mittleren Richtungsvektor des von der Streuscheibe 2.1, 2.2 abgeworfenen Streugutes, mithin der mittleren Wurfrichtung, angibt. Der mittlere Abwurfwinkel zeigt hierbei typischerweise die Position des Massenschwerpunktes innerhalb des Teilstreufächers 15.1, 15.2 an. Die Streufächerbreite gibt die Streubreite des Schleuderstreuers 1 an und die Arbeitsbreite AB entspricht typischerweise der halben Streufächerbreite, da mit einem Schleuderstreuer normalerweise überlappend gearbeitet wird. In diesem Fall reicht der Streufächer dann idealerweise an beiden Seiten bis zur Mitte der benachbarten Fahrspur.

Es ist eine Messvorrichtung 10.1, 10.2 pro Streuscheibe an dem Schleuderstreuer 1 angeordnet. Die Messrichtung der Sensoren weist hierbei einen Winkel zur Fahrtrichtungsachse F auf, so dass kein Streugut durch die Sensoren 10.1, 10.2 erfasst wird, welches in den Überlappungsbereich 16 geworfen wird. Anders ausgedrückt wird durch einen ersten Sensor 10.1 kein Streugut erfasst, welches durch die zweite Streuscheibe 2.2 abgeworfen wurde und umgekehrt. Die Messrichtung zeigt hierbei in Richtung der Winkelhalbierenden des Messbereichs MB1, MB2, welcher den Bereich angibt, welcher durch den Sensor 10.1, 10.2 jeweils erfasst wird. Die Messrichtung der Sensoren 10.1, 10.2 zeigt hierbei jeweils vorzugsweise zumindest annähernd in Richtung der mittleren Wurfrichtung, weist also denselben Winkel zur Fahrtrichtung auf, wie der jeweilige mittlere Abwurfwinkel MW1, MW2. Hierdurch wird sichergestellt, dass jeweils nur Streugut erfasst wird, welches durch die Streuscheibe 2.1, 2.2 abgeworfen wurde, der der Sensor 10.1, 10.2 zugeordnet ist. Da der mittlere Abwurfwinkel MA1, MA2 der Streuscheiben 2.1, 2.2 in Grenzen durch die Anpassung der Streuscheibendrehzahl und/oder des Aufgabepunktes des Streugutes auf die Streuscheibe anpassbar ist, der Sensor 10.1, 10.2 jedoch vorzugsweise fest an dem Schleuderstreuer 1 montiert ist, ist nur eine ungefähre Parallelausrichtung der Messrichtung und des mittleren Abwurfwinkels möglich. Eine derartige ungefähre Ausrichtung der Sensoren 2.1, 2.2 ist jedoch vollkommen ausreichend, da der Winkel zwischen der Messrichtung und der Fahrtrichtung lediglich derart zu wählen ist, dass durch den jeweiligen Sensor kein von der benachbarten Streuscheibe abgeworfenes Streugut erfasst wird. Der Winkel zwischen Fahrtrichtung und Messrichtung kann in einer bevorzugten Ausgestaltung zumindest 10° betragen, beispielsweise ungefähr 30°, wie in der Fig. 2 gezeigt.

Der Einfluss von Wind auf das Streubild bzw. die Messwerte der Sensoren ist in Fig. 3 dargestellt. Diese zeigt Fahrspuren 21.1, 21.2 auf einer landwirtschaftlichen Fläche 5. Ein Schleuderstreuer 1 ist bei der Bearbeitung der landwirtschaftlichen Fläche 5 auf benachbarten Fahrspuren und jeweils entgegengesetzter Fahrtrichtung F1, F2 dargestellt. Das Streugut wird durch die Streuscheiben 2.1, 2.2 in den Teilstreufächer 15.1, 15.2 auf der landwirtschaftlichen Fläche verteilt, wobei das Streubild durch den Einfluss von Wind, dargestellt in Stärke und Richtung als Vektor 22, verzerrt wird. Dieses ist in Fig. 3 dargestellt durch die durchgezogenen Linien des durch den Wind verzerrten Streufächers 15.2 und den im Vergleich unverzerrten, gestrichelt dargestellten Streufächer 17.2. Hierbei ist bei einer Bewegung des Schleuderstreuers entlang der Fahrtrichtung F1 die Windrichtung überwiegend parallel zu der Bewegungsrichtung des Streugutes, welches sich in Richtung des mittleren Abwurfwinkels der Streuscheibe 2.2 bewegt und überwiegend senkrecht zu der Bewegungsrichtung des Streugutes, welches sich in Richtung des mittleren Abwurfwinkels der Streuscheibe 2.1 bewegt. Die Wurfweite des Streugutes der Streuscheibe 2.2 in Messrichtung des Sensors 10.2 wird somit, je nach Windstärke, signifikant durch den Einfluss des in paralleler Richtung wehenden Windes beeinflusst, was zu einer veränderten gemessenen Wurfweite führt. Dies ist in Fig. 3 dargestellt durch die gestrichelte Linie, welche die unveränderte, bei Windstille gemessene Wurfweite UMW2 darstellt, welche kleiner ist im Vergleich zur durch den Wind beeinflussten, gemessenen Wurfweite MW2. Da der Sensor 10.2 zumindest annähernd in Richtung des mittleren Abwurfwinkels der Streuscheibe 2.2 ausgerichtet ist, ermittelt dieser Sensor also eine durch den Wind vergrößerte Wurfweite MW2. Die gestrichelte Linie UMW2 ist zur Verdeutlichung der Darstellung leicht versetzt zu der gemessenen Wurfweite MW2 dargestellt. Durch den Wind wird ebenfalls die Form des Streufächers beeinflusst, was in Fig. 3 in einer leichten Asymmetrie der Streufächer zum Ausdruck kommt.

Die ermittelte Wurfweite des Sensors 10.1 ist annähernd unverändert, da der mittlere Abwurfwinkel der Streuscheibe 10.1 annähernd senkrecht auf der Richtung des Windes 22 steht. Durch Mittelung der ermittelten Wurfweiten MW1 und MW2 können nun hinsichtlich des Einflusses des Windes auf die Wurfweiten korrigierte Wurfweiten MW1, MW2 ermittelt werden, welche zumindest bezüglich der Beeinflussung durch den Wind homogenisiert sind. Die korrigierten bzw. homogenisierten Wurfweiten MW1 und MW2 werden nun durch eine nicht dargestellte Datenverarbeitungseinheit verwendet, um die Parameter des Schleuderstreuers 1, wie Drehzahl der Streuscheiben und Aufgabepunkt des Streugutes in der Weise anzupassen, dass ein gewünschtes Sollstreubild eingestellt wird. Hierbei ist es das Ziel der Verrechnung der beiden Wurfweitenmesswerte MW1 und MW2 den Einfluss des Windes auf den Messwert MW2 zu reduzieren, um die Messwerte an die Messbedingungen, unter welchen das Sollstreubild, beispielsweise in einer windgeschützten Streuhalle, eingestellt wurde, anzupassen. Auf diese Weise lässt sich ein gewünschtes Streubild trotz des Einfluss des Windes auf die Verteilung des Streugutes einstellen.

Entsprechend ist die Windrichtung bei der Fahrt entlang der Fahrspur 21.2 in Fahrtrichtung F2 annähernd antiparallel zu dem mittleren Abwurfwinkel des Streugutes ausgerichtet, welches von der Streuscheibe 2.2 abgeworfen wird. Hierdurch ist die mittlere Wurfweite MW2 der Streuscheibe 2.2 reduziert gegenüber einer unveränderten mittleren Wurfweite UMW2 bei Windstille. Durch Verrechnung, beispielsweise Mittelwertbildung der Messwerte MW1 und MW2 kann auch hier der Einfluss des Windes auf die Wurfweite MW2 reduziert werden und das gewünschte Sollstreubild durch die Datenverarbeitungseinheit effektiver eingestellt werden.

Wichtig ist, dass die Korrektur der Wurfweite durch Mittelwertbildung nicht dazu dient, den Windeinfluss auf die Wurfweite bei der Einstellung des Schleuderstreuers zu berücksichtigen, indem beispielsweise bei Gegenwind relativ zum mittleren Abwurfwinkel eine größere Drehzahl gewählt wird, um dem Gegenwind entgegenzuwirken, sondern es soll der mittlere Abwurfwinkel gerade bezüglich des Windeinflusses bereinigt werden. Der Grund hierfür ist, dass zur Einstellung des gewünschten Streubildes die Messdaten möglichst denen unter idealen Bedingungen (windgeschützte Streuhalle) entsprechen müssen, da diese ansonsten nicht vergleichbar wären.

Der in Fig. 3 dargestellte Schleuderstreuer umfasst vorzugsweise ebenso jeweils eine Sensoranordnung pro Streuscheibe zur Messung des mittleren Abwurfwinkels. Zusätzlich kann jedoch vorgesehen sein, einen in der Fig. 3 nicht dargestellten Windsensor an dem Schleuderstreuer 1 oder Schlepper 4 anzuordnen, welcher Windstärke und Windrichtung 22 ermittelt. In der Datenverarbeitungseinheit könnte in dem Regelkreis zur Einstellung des Sollstreubildes dann der Einfluss des Windes auf das Streubild berücksichtigt werden. In diesem Fall wird also zunächst beispielsweise eine Mittelwertbildung der mittleren Wurfweiten MW1, MW2 vorgenommen, um die Messdaten hinsichtlich des gewünschten Sollstreubildes auszuwerten. Die einzustellenden Parameter wie Drehzahl und Aufgabepunkt werden dann unter Berücksichtigung der gemessenen Windrichtung und Windstärke ggf. asymmetrisch zum Ausgleich des Windeinflusses angepasst.

## Patentansprüche

1. Verfahren zur Ermittlung des Streubildes bei einem landwirtschaftlichen Schleuderstreuer, wobei der Schleuderstreuer
• über einen ersten Sensor (10.1), insbesondere Radarsensor, zur berührungslosen Ermittlung einer ersten zu der Fluggeschwindigkeit und/oder Wurfweite des abgeworfenen Streugutes proportionalen ersten Größe (MW1) nach dem Abwurf von der und/oder den Streuscheiben (2.1) verfügt, **dadurch gekennzeichnet, dass** der Schleuderstreuer weiter
• über einen Windsensor zur Ermittlung der Windrichtung und/oder der Windstärke verfügt
wobei zur Reduktion des Einflusses von Windstärke und/oder Windrichtung auf die Ermittlung des Streubildes die ermittelte erste Größe (MW1) und zumindest eine zweite ermittelte Größe (MW2) berücksichtigt wird, wobei
• ein hinsichtlich des Windeinflusses bereinigter Messwert für die Wurfweite ermittelt wird,
• die ermittelte Windrichtung und/oder Windstärke als zweite ermittelte Größe bei der Ermittlung des Streubildes berücksichtigt wird.

2. Verfahren nach Anspruch 1, **gekennzeichnet durch** Reduzieren des Einflusses des Windes auf die gemessene erste Größe oder Wurfweite, so dass der ermittelte Wert mit einem in einer windstillen Streuhalle ermittelten Sollstreubild vergleichbar ist.

3. Verfahren nach Anspruch 2, **dadurch gekennzeichnet, dass** das gewünschte Sollstreubild durch Anpassung der Parameter des Schleuderstreuers, insbesondere der Streuscheibendrehzahl und/oder des Aufgabepunkts des Streuguts auf die Streuscheiben, eingestellt wird.

4. Verfahren nach einem der vorstehenden Ansprüche, **dadurch gekennzeichnet, dass** je nach Windrichtung die Windstärke oder eine zu der Windstärke proportionale Größe additiv oder multiplikativ bei der Bestimmung der Wurfweite berücksichtigt wird.

5. Verfahren nach einem der vorstehenden Ansprüche, **dadurch gekennzeichnet, dass** die Fahrgeschwindigkeit des den Schleuderstreuer tragenden Traktors bei der Ermittlung der Wurfweite berücksichtigt wird.

6. Verfahren nach einem der vorstehenden Ansprüche, **dadurch gekennzeichnet, dass** der Schleuderstreuer über einen zweiten Sensor (10.2), insbesondere Radarsensor, zur berührungslosen Ermittlung einer zu der Fluggeschwindigkeit und/oder Wurfweite des abgeworfenen Streugutes proportionalen zweiten Größe (MW2) nach dem Abwurf von der Streuscheibe verfügt, wobei der erste Sensor einer ersten Streuscheibe (2.1) und der zweite Sensor (10.2) einer zweiten Streuscheibe (2.2) des Schleuderstreuers zugeordnet ist und wobei die ermittelte erste Größe (MW1) und zumindest die ermittelte zweite Größe (MW2) bei der Ermittlung des Streubildes berücksichtigt wird.

7. Verfahren nach zumindest einem der vorstehenden Ansprüche, **dadurch gekennzeichnet, dass** eine zu der Wurfweite proportionale Größe aus der ersten und zweiten Größe (MW1, MW2) und der Umdrehungsgeschwindigkeit der zumindest einen Streuscheibe sowie vorzugsweise der Art der verwendeten Streuscheiben (2.1, 2.2) und/oder Wurfschaufeln (3) ermittelt wird.

8. Verfahren nach zumindest einem der vorstehenden Ansprüche, **dadurch gekennzeichnet, dass** zur Einstellung eines Sollstreubildes die erste und zweite Größe (MW1, MW2) bei der Einstellung der Parameter des Schleuderstreuers, insbesondere Streuscheibendrehzahl und/oder Aufgabepunkt des Streugutes auf die Streuscheiben, berücksichtigt wird.

## Claims

1. Method for determining the spreading pattern in an agricultural centrifugal spreader, wherein the centrifugal spreader has
• a first sensor (10.1), in particular a radar sensor, for contactlessly determining a first variable (MW1) that is proportional to the flying speed and/or throwing distance of the ejected spreading material following ejection from the spreading disc and/or discs (2.1), **characterized in that** the centrifugal spreader also has
• a wind sensor for determining the wind direction and/or the wind strength,
wherein, to reduce the influence of wind strength and/or wind direction on the determination of the spreading pattern, the determined first variable (MW1) and at least one second determined variable (MW2) are taken into account, wherein
• a measured value, which has been adjusted with regard to the wind influence, for the throwing distance is determined,
• the determined wind direction and/or wind strength are/is taken into account as second determined variable when determining the spreading pattern.

2. Method according to Claim 1, **characterized by** reducing the influence of the wind on the measured first variable or throwing distance, such that the determined value is comparable with a setpoint spreading pattern determined in a windless spreading hall.

3. Method according to Claim 2, **characterized in that** the desired setpoint spreading pattern is set by adapting the parameters of the centrifugal spreader, in particular the spreading disc rotational speed and/or the application point of the spreading material onto the spreading discs.

4. Method according to one of the preceding claims, **characterized in that**, depending on the wind direction, the wind strength or a variable that is proportional to the wind strength is taken into account in an additive or multiplicative manner when determining the throwing distance.

5. Method according to one of the preceding claims, **characterized in that** the driving speed of the tractor carrying the centrifugal spreader is taken into account when determining the throwing distance.

6. Method according to one of the preceding claims, **characterized in that** the centrifugal spreader has a second sensor (10.2), in particular a radar sensor, for contactlessly determining a second variable (MW2) that is proportional to the flying speed and/or throwing distance of the ejected spreading material following ejection from the spreading disc, wherein the first sensor is assigned to a first spreading disc (2.1) and the second sensor (10.2) to a second spreading disc (2.2) of the centrifugal spreader, and wherein the determined first variable (MW1) and at least the determined second variable (MW2) are taken into account when determining the spreading pattern.

7. Method according to at least one of the preceding claims, **characterized in that** a variable that is proportional to the throwing distance is determined from the first and second variables (MW1, MW2) and the speed of rotation of the at least one spreading disc and preferably the type of spreading discs (2.1, 2.2) and/or thrower blades (3) used.

8. Method according to at least one of the preceding claims, **characterized in that**, to set a setpoint spreading pattern, the first and second variables (MW1, MW2) are taken into account when setting the parameters of the centrifugal spreader, in particular the spreading disc rotational speed and/or the application point of the spreading material on the spreading discs.

## Revendications

1. Procédé de détermination du schéma d'épandage dans un épandeur centrifuge agricole, l'épandeur centrifuge comportant
• un premier capteur (10.1), en particulier un capteur radar, destiné à déterminer sans contact une première grandeur (MW1) proportionnelle à la vitesse de vol et/ou à la distance de projection du produit à épandre après que celui-ci a été projeté par le et/ou les disques d'épandage (2.1), **caractérisé en ce que** l'épandeur centrifuge comporte en outre
• un capteur de vent destiné à déterminer la direction et/ou la force du vent,
la première grandeur déterminée (MW1) et au moins une deuxième grandeur déterminée (MW2) étant prises en compte pour réduire l'influence de la force du vent et/ou de la direction du vent sur la détermination du schéma d'épandage,
• une valeur de mesure corrigée en termes d'influence du vent étant déterminée pour la distance de projection,
• la direction du vent et/ou la force du vent déterminées étant prises en compte comme deuxième grandeur déterminée lors de la détermination du schéma d'épandage.

2. Procédé selon la revendication 1, **caractérisé en ce que** l'influence du vent sur la première grandeur ou la distance de projection mesurée est réduite de sorte que la grandeur déterminée puisse être comparée à un schéma d'épandage cible déterminé dans un hall d'épandage sans vent.

3. Procédé selon la revendication 2, **caractérisé en ce que** le schéma d'épandage cible souhaité est réglé par adaptation des paramètres de l'épandeur centrifuge, notamment de la vitesse de rotation des disques d'épandage et/ou du point d'application du produit à épandre sur les disques d'épandage.

4. Procédé selon l'une des revendications précédentes, **caractérisé en ce que** la force du vent ou une grandeur proportionnelle à la force du vent est prise en compte de manière additive ou multiplicative en fonction de la direction du vent lors de la détermination de la distance de projection.

5. Procédé selon l'une des revendications précédentes, **caractérisé en ce que** la vitesse de roulement du tracteur portant l'épandeur centrifuge est prise en compte lors de la détermination de la distance de projection.

6. Procédé selon l'une des revendications précédentes, **caractérisé en ce que** l'épandeur centrifuge comporte un deuxième capteur (10.2), notamment un capteur radar, destiné à déterminer sans contact une deuxième grandeur (MW2) proportionnelle à la vitesse de vol et/ou à la distance de projection du produit à épandre après que celui-ci a été projeté par le disque d'épandage, le premier capteur étant associé à un premier disque d'épandage (2.1) et le deuxième capteur (10.2) étant associé à un deuxième disque d'épandage (2.2) de l'épandeur centrifuge, et la première grandeur (MW1) et au moins la deuxième grandeur (MW2) déterminées étant prises en compte lors de la détermination du schéma d'épandage.

7. Procédé selon l'une au moins des revendications précédentes, **caractérisé en ce qu'**une grandeur proportionnelle à la distance de projection est déterminée parmi la première grandeur et la deuxième grandeur (MW1, MW2) et la vitesse de rotation de l'au moins un disque d'épandage et de préférence du type de disque d'épandage utilisé (2.1, 2.2) et/ou de pales de projection utilisées (3).

8. Procédé selon l'une au moins des revendications précédentes, **caractérisé en ce que**, pour régler un schéma d'épandage cible, les première et deuxième grandeurs (MW1, MW2) sont prises en compte lors du réglage des paramètres de l'épandeur centrifuge, notamment la vitesse de rotation des disques d'épandage et/ou le point d'application du produit à épandre sur les disques d'épandage.
